# EUROPÄISCHE PATENTSCHRIFT

(11) **EP 4 211 898 B1**
(45) Veröffentlichungstag und Bekanntmachung des Hinweises auf die Patenterteilung: **07.10.2026**
(21) Anmeldenummer: 21758701.3
(22) Anmeldetag: 12.08.2021
(51) Int. Cl.: H04N 9/31, B60Q 1/50, H01S 3/00

(54) **VISUELLE OBJEKTPROJEKTION IN DIE UMGEBUNG MITTELS SICHTBAREN STRAHLUNGSPULSEN**
VISUAL OBJECT PROJECTION INTO THE SURROUNDINGS BY MEANS OF VISIBLE RADIATION PULSES
PROJECTION D'OBJETS VISUELS DANS L'ENVIRONNEMENT AU MOYEN D'IMPULSIONS DE RAYONNEMENT VISIBLES

(30) Priorität: 14.09.2020 DE 102020211509
(43) Veröffentlichungstag der Anmeldung: 19.07.2023
(73) Patentinhaber: VOLKSWAGEN AKTIENGESELLSCHAFT, 38440 Wolfsburg (DE)
(72) Erfinder: KURZ, Heiko Gustav, 30177 Hannover (DE); MEINECKE, Marc-Michael, 38524 Sassenburg (DE)
(86) Internationale Anmeldenummer: PCT/EP2021/072451
(87) Internationale Veröffentlichungsnummer: WO 2022/053250

(56) Entgegenhaltungen:
- JP-A- 2004 243 794
- US-B2- 10 554 961
- ALEXEEV I ET AL: "Longitudinal compression of short laser pulses in air", APPLIED PHYSICS LETTERS, AMERICAN INSTITUTE OF PHYSICS, 2 HUNTINGTON QUADRANGLE, MELVILLE, NY 11747, vol. 84, no. 20, 17 May 2004 (2004-05-17), pages 4080 - 4082, XP012061521, ISSN: 0003-6951, DOI: 10.1063/1.1753051

## Beschreibung

Die Erfindung betrifft ein Verfahren zum Projizieren (virtueller) visueller Objekte in die Umgebung sowie eine Vorrichtung und ein Fahrzeug, umfassend eine Vorrichtung zum Durchführen einer solchen Projektion.

Bewegbare Vorrichtungen und insbesondere Fahrzeuge umfassen visuell wahrnehmbare Signalsysteme in Form einer Lichtanlage, insbesondere um geplante Fahrmanöver oder aber etwaige Gefahren anzuzeigen. Im Stand der Technik finden sich Ansätze, dies durch die Möglichkeit zum Projizieren (virtueller) Projektionsobjekte in die Umgebung zu erweitern.

Beispielhaft wird verwiesen auf die DE 10 2006 050 548 A1, die DE 10 2006 050 546 A1, die DE 10 2012 024 494 A1 und DE 20 2016 004 062 U1, die entsprechende Lösungen offenbaren.

Derartigen Lösungen ist gemein, dass insbesondere in zunehmendem Abstand von einer Vorrichtung, welche die Objekte projiziert, die projizierten Objekte bzw. Inhalte unter Umständen nur schwer zu erkennen sind. Grund ist u.a. eine sich verringernde Spitzenintensität mit zunehmendem Abstand zur Projektionseinheit, insbesondere aufgrund einer zunehmenden Divergenz bei großen Abständen zur Projektionsvorrichtung.

Aufgrund von Sicherheitsanforderungen an die Projektionsvorrichtung, die in der Regel Laser-Strahlquellen umfassen, kann die eingestrahlte Strahlungsleistung nicht beliebig erhöht werden. Es wird verwiesen auf die DIN EN 60825-1, welche Grenzwerte für die Spitzenintensität bzw. Spitzenenergiedichte eingestrahlter Strahlung nennt, denen das menschliche Auge ausgesetzt werden darf.

Aus der JP 2004 243794 A ist ein Verfahren und eine Vorrichtung bekannt, mittels derer virtuelle, visuelle Objekte von einem Kraftfahrzeug in die Umgebung projiziert werden, wobei die Strahlungsquelle einen Laser aufweist, dessen Intensität aufgrund der Augensicherheit begrenzt ist.

Aus dem Fachartikel ALEXEEV I ET AL "Longitudinal compression of short laser pulses in air" APPLIED PHYSICS LETTERS; AMERICAN INSTITUTE OF PHYSICS Bd. 84, Nr. 20, 17. Mai 2004 (2004-05-17), Seiten 4080-4082, ISSN: 0003-6951, DOI: 10.1063/1.1753051 ist bekannt, dass negative gechirpte Laserpulse durch Dispersionseffekte in der Luft gestaucht werden.

Aus der US 10,554,961 B2 ist eine Vorrichtung zur Erzeugung von 3D-Bildern bekannt, wobei hierzu optische Einheiten Laserpulse verformen.

Die Erfindung stellt sich die Aufgabe, eine Lösung zum Projizieren virtueller visueller Objekte in die Umgebung bereitzustellen, bei der die projizierten Objekte auch in zunehmender Entfernung von einer projizierenden Vorrichtung gut erkennbar sind.

Diese Aufgabe wird durch die beigefügten unabhängigen Ansprüche gelöst. Vorteilhafte Weiterbildungen sind in den abhängigen Ansprüchen angegeben.

Die Erfindung beruht auf der vorstehend angedeuteten Erkenntnis, dass eine eingestrahlte Strahlungsleistung zum Einhalten gegebener Grenzwerte nicht beliebig erhöht werden kann. Erfindungsgemäß wurde aber erkannt, dass die per Grenzwert definierte Spitzenintensität bzw. Spitzenenergiedichte auch von der Pulsdauer eingestrahlter Strahlungspulse abhängt. Es wird daher eine Lösung vorgeschlagen, die es ermöglicht, nahe einer projizierenden Vorrichtung (bzw. Strahlungsquelle) große Pulsdauern bereitzustellen, wodurch die Spitzenintensität bzw. Spitzenenergiedichte in diesem Bereich gesenkt wird und insbesondere unterhalb gegebener Grenzwerte gesenkt werden kann. Mit zunehmender Entfernung verkürzt sich die Pulsdauer allerdings.

Dies erfolgt insbesondere in der Weise, dass bisher die Spitzenintensität bzw. Spitzenenergiedichte herabsetzende Divergenzeffekte zumindest teilweise kompensiert werden.

Die Spitzenintensität bzw. Spitzenenergiedichte nimmt dann mit zunehmendem Abstand von der projizierenden Vorrichtung weniger stark ab, als dies bisher der Fall ist. Bevorzugt wird sie im Wesentlichen auf demselben Niveau wie beim anfänglichen Einstrahlen in die Umgebung (d.h. wie in geringen Abständen zur projizierenden Vorrichtung) gehalten.

Hierdurch kann erreicht werden, dass eine möglichst große Spitzenintensität bzw. Spitzenenergiedichte, die aber noch unterhalb gegebener Grenzwerte liegt, eingestrahlt und auch aufrechterhalten wird, bis die projizierte Strahlung in der Umgebung auftrifft. Aufgrund der beim Auftreffen noch vorliegenden hohen Intensität ist die Strahlung vom menschlichen Auge noch zuverlässig wahrnehmbar. Insbesondere ist sie besser wahrnehmbar, als wenn sich bei unveränderter Pulsdauer und einer mit zunehmendem Abstand steigenden Divergenz die bisherige deutliche Intensitätsabschwächung der eingestrahlten Inhalte einstellt.

Für die entsprechende Kompression der Pulsdauer während der Propagation schlägt die Erfindung vor, eine Frequenzverteilung innerhalb eingestrahlter Strahlungspulse anfänglich zu erzeugen, die unter Dispersionseffekten während einer Propagation in der Umgebung sozusagen zu einer selbst-Komprimierung des Pulses führt. Dieser oder zumindest einzelne Frequenzanteile hiervon werden vorzugsweise abgebremst bzw. zeitlich gestaucht und dadurch wird die Pulsdauer komprimiert. Das Erzeugen einer solchen Frequenzverteilung kann zuverlässig mittels kompakt bauender optischer Einheiten erzielt werden, sodass sich die vorgestellte Lösung insgesamt auch aufwandsarm umsetzen lässt.

Insbesondere wird ein Verfahren zum Projizieren (virtueller) visueller Objekte (d.h. visuell wahrnehmbarer Objekte) in die Umgebung einer bewegbaren Vorrichtung, insbesondere eines Fahrzeugs (ferner insbesondere eines Kraftfahrzeugs, wie z.B. eines Personenkraftwagens, Lastkraftwagens und/oder Busses), vorgeschlagen, mit:
- Einstrahlen elektromagnetischer Strahlungspulse (nämlich Laserpulse) im sichtbaren Spektralbereich in die Umgebung, wobei die Strahlungspulse eine zeitliche Frequenzverteilung über ihre Pulsdauer aufweisen, die bei dem Einstrahlen in die (und insbesondere Propagieren in der) Umgebung unter Dispersionseinfluss zu einer Pulsdauerverkürzung führt (genauer gesagt bei einer Propagation durch die Umgebung unter Dispersionseinfluss zu der Pulsdauerverkürzung führt). Mit zunehmendem Abstand zur Vorrichtung verkürzt sich die Pulsdauer somit vorzugsweise zunehmend.

Die Strahlungspulse werden mittels einer Laserstrahlquelle erzeugt. Es kann sich um ultrakurze Laserpulse handeln, die, wie nachstehend noch erläutert, zum Erzeugen der Frequenzverteilung jedoch nach oder während ihrer Erzeugung verändert werden. Die Strahlungspulse können hochfrequent aufeinanderfolgen, um vom menschlichen Auge als ein konstanter Strahl bzw. ein konstant projiziertes und/oder eingestrahltes Objekt wahrgenommen zu werden. Zum Projizieren und dadurch Abbilden eines gewünschten Objekts in der Umgebung können die Strahlungspulse gemäß herkömmlicher Ansätze mit geeigneten Einheiten wechselwirken, beispielsweise mit optischen Masken. Es ist aber auch möglich, die Laserpulse bzw. einen hiervon geformten und gepulsten Laserstrahl beweglich (d.h. veränderlich ablenkbar) zu gestalten, sodass die Objekte sozusagen durch Aufzeichnen in der Umgebung mittels des bewegten (gepulsten) Laserstrahls erzeugt werden können. Auch jegliche weitere Ansätze aus dem Stand der Technik können verwendet werden, wie insbesondere in den einleitend zitierten vorbekannten Druckschriften offenbart.

In an sich bekannter Weise kann der Strahlungspuls, der auch als Lichtpuls und/oder Laserlichtpuls bezeichnet werden kann, ein gewisses Spektrum bzw. eine gewisse Bandbreite von elektromagnetischen Wellen mit unterschiedlicher Frequenz umfassen. Anders ausgedrückt kann der Strahlungspuls ein Wellenpaket an elektromagnetischer Strahlung umfassen. Der Strahlungspuls kann von einer Strahlungsquelle zunächst als Lichtpuls mit einem Wellenpaket erzeugt werden, dessen einzelne Wellen eine gleiche Phase aufweisen. Insbesondere kann es sich um einen bandbreiten-begrenzten oder auch Fourier-limitierten Puls handeln, der für sein umfasstes Wellenlängen-Spektrum eine geringe und bevorzugte minimal mögliche Pulsdauer aufweist. Dieser erzeugte und innerhalb der Vorrichtung vorliegende Puls wird durch optische Einheiten der nachstehend geschilderten Art geführt, um anschließend die gewünschte Frequenzverteilung zu erfahren bzw. erzeugen. Im Rahmen dieser Offenbarung wird daher von einem anfänglich oder initial erzeugten Strahlungspuls gesprochen, der insbesondere Fourierlimitiert sein kann, wobei der Strahlungspuls mit der zeitlichen Frequenzverteilung, der bevorzugt erst anschließend bzw. auf Basis der initial erzeugten Fourier-limitierten Pulses erzeugt wird, als in die Umgebung eingestrahlter Strahlungspuls bezeichnet werden kann.

Unter einer bewegbaren Vorrichtung kann insbesondere eine Vorrichtung mit eigenem Antriebssystem verstanden werden. Beispielsweise kann es sich auch um einen Industrieroboter handeln.

Dabei ist vorgesehen, dass die zeitliche Frequenzverteilung derart erfolgt, dass hochfrequente Anteile (innerhalb des Wellenlängenspektrums des Strahlungspulses) niedrig frequenten Anteilen (innerhalb des genannten Wellenlängenspektrums) zeitlich vorauseilen. Wie erwähnt, kann sich der Strahlungspuls aus einer gewissen Bandbreite an elektromagnetischen Wellen mit jeweils individuellen Frequenzen zusammensetzen. Hochfrequente Anteile können Frequenzanteile sein, die eine mittlere bzw. durchschnittliche Frequenz überschreiten. Niedrigfrequente Anteile können Anteile sein, die eine mittlere bzw. durchschnittliche Frequenz unterschreiten. Auch ein anderer Schwellenwert zur Unterteilung in entsprechende Anteile kann vorgegeben werden. Es ist nicht zwingend erforderlich, dass sämtliche hochfrequenten Anteile sämtlichen niederfrequenten Anteilen zeitlich vorauseilen. Bevorzugt findet die zeitliche Frequenzverteilung aber derart statt, dass zumindest einige und vorzugsweise der überwiegende Anteil von hochfrequenten Anteilen zumindest einigen und bevorzugt der überwiegenden Anzahl von niederfrequenten Anteilen zeitlich vorauseilen.

Es hat sich gezeigt, dass bei der Propagation in der Umgebung und Dispersionseinflüssen dort typischerweise vorhandener Luft eine derartige zeitliche Frequenzverteilung dazu führt, dass die hochfrequenten Anteile stärker als die niederfrequenten Anteile abgebremst werden. Dies führt zu einer zeitlichen Stauchung oder, mit anderen Worten, zeitlichen Komprimierung des Pulses, wodurch sich die Pulsdauer verkürzt und die Spitzenintensität ansteigt.

Daher sind die Strahlungspulse negativ gechirpt. Unter diesem in der Fachwelt bekannten Begriff kann insbesondere verstanden werden, dass die zeitliche Frequenzverteilung in der vorstehend genannten Weise erfolgt, also hochfrequente Anteile niederfrequenten Anteilen zeitlich vorauseilen. Zum Bereitstellen entsprechend negativ gechirpter Strahlungspulse existieren optische Einheiten, durch die ein anfänglich erzeugter und insbesondere Fourierlimitierter Puls geführt wird, beispielsweise ein anormal dispersives Medium, z.B. ein sogenannter gechirpter Spiegel. Auf diese Weise kann die gewünschte zeitliche Frequenzverteilung aufwandsarm bereitgestellt werden.

Weiter ist vorgesehen, dass die Strahlungspulse in Abhängigkeit von einer Entfernung zu einem Umgebungsbereich erzeugt werden, auf den ein Objekt projiziert werden soll. Dies betrifft insbesondere eine Frequenzverteilung der Strahlungspulse. Demnach können initial erzeugte Strahlungspulse, deren Frequenzverteilung erst nachträglich durch definierte Dispersion in einer optischen Einheit eingestellt wird, in herkömmlicher Weise als Fourier-limitierte Laserpulse erzeugt werden. Zumindest die anschließende Frequenzverteilung kann dann aber in Abhängigkeit des Abstandes erfolgen, sodass die eingestrahlten Strahlungspulse entsprechend abstandsabhängig sind bzw. abstandsabhängig erzeugt werden.

Insbesondere kann eine Pulsdauer der eingestrahlten Strahlungspulse (d.h. der Pulse mit zeitlicher Frequenzverteilung) in Abhängigkeit des Abstands gewählt sein. Diese kann insbesondere derart gewählt sein, dass in Abhängigkeit des Abstandes die eingestrahlten Strahlungspulse unterschiedlich stark zeitlich gestreckt werden (allgemein je größer der Abstand, desto größer die zeitliche Streckung). Eine derartige variable Streckung kann beispielsweise unter Zuhilfenahme von Pulsformern auf LCD-Basis (Liquid Crystal Display Basis) oder die Anpassung einer Reflexanzahl auf gechirpten reflexiven oder transmittiven Schichten, wie z.B. gechirpten Spiegeln (chirped mirror), erfolgen.

Geeignete Pulsformer (oder auch Pulsshaper) sind erhältlich. Hiermit kann der Puls per optischem Gitter spektral räumlich zerlegt werden. Die einzelnen Spektralkomponenten werden bevorzugt auf ein LCD abgebildet, an dessen Pixeln ein räumlicher Phasenverlauf angelegt wird, so dass die unterschiedlichen Spektralkomponenten eine unterschiedliche Phasenverzögerung durch Brechungsindexmodulation erhalten. Durch anschließende spektralräumliche Zusammenführung ist somit ein zeitlicher Phasenverlauf aufgeprägbar, was einem Chirp entspricht.

Bei der Anpassung der Reflexzahl kann pro Reflexion durch z.B. einen oben genannten gechirpten Spiegel eine definierte Dispersion bzw. ein definierter Dispersionsbetrag aufgeprägt werden. Der Puls sammelt dabei durch das Material des Spiegels eine spektrale Phase auf (bzw. die Pulsphase kann sich aus entsprechend gechirpten Anteilen zusammensetzen oder hiervon definiert werden). Diese Phase kann im Zeitraum wiederum einer zeitlichen Phase entsprechen.

Allgemein kann die zeitliche Streckung derart erfolgen, dass beim Auftreffen in der Umgebung (also in dem ermittelten Abstand) sich eine gewünschte Pulsdauerreduzierung eingestellt hat, also der eingestrahlte Puls eine in gewünschter Weise reduzierte Pulsdauer aufweist. Hierfür kann von einer Propagation in Luft mit definierten Eigenschaften (z.B. definierter Temperatur und/oder Luftfeuchtigkeit) ausgegangen werden und kann die sich beispielsweise aufgrund einer erwarteten Dispersion verkürzte Pulsdauer berechnet werden. Diese Berechnung kann das Lösen der Helmholtz-Gleichung zum Bestimmen einer nichtlinearen Propagation umfassen.

Wie bereits erwähnt, werden die Strahlungspulse zunächst jeweils mit einer initialen Pulsdauer erzeugt und anschließend die Frequenzverteilung und Streckung der initialen Pulsdauer zu einer anfänglich eingestrahlten Pulsdauer erzeugt. Auch dies erfolgt noch innerhalb der Strahlungsquelle. Erst anschließend kann der entsprechend gestreckte Puls, der die Frequenzverteilung aufweist, in die Umgebung eingestrahlt werden und in Richtung eines Auftreffbereichs in der Umgebung propagieren. Bei zunehmender Propagation in der Umgebung verkürzt sich die Pulsdauer dabei vorteilhafterweise.

Durch die anfängliche gestreckte Pulsdauer wird die Spitzenintensität insbesondere nahe einem die Projektionsvorrichtung aufweisenden Fahrzeug gezielt herabgesetzt. Dies erhöht die Betriebssicherheit und vermindert Verletzungsrisiken für Personen in der Umgebung. Durch die sich dann zunehmend reduzierende Pulsdauer ist aber gewährleistet, dass bei Auftreffen in der Umgebung noch eine ausreichende Spitzenintensität vorliegt, sodass dort eine zuverlässige Sichtbarkeit gegeben ist.

Insbesondere kann in diesem Zusammenhang vorgesehen sein, dass die Pulsdauer bei Auftreffen in der Umgebung näher an der initial erzeugten als an der anfänglich eingestrahlten Pulsdauer (nach zeitlicher Streckung und Erzeugen der Frequenzverteilung) liegt. Anders ausgedrückt kann also die zeitliche Streckung während der Propagation in der Umgebung überwiegend rückgängig gemacht werden. Dies kann insbesondere derart erfolgen, dass die Pulsdauer bei Auftreffen in der Umgebung der initial erzeugten Pulsdauer im Wesentlichen entspricht und insbesondere wieder einer Fourier-limitierten Pulsdauer entspricht. Alternativ kann sie um nicht mehr als 10 % oder nicht mehr als 20 % der genannten Pulsdauern von diesen abweichen. Wird direkt ein gechripter Puls erzeugt und eingestrahlt, kann die Pulsdauer derart reduziert werden, dass sie gegenüber der anfänglich eingestrahlten Pulsdauer verringert ist. Sie kann dann näher an einer Pulsdauer liegen, die einer (fiktiven oder theoretischen) Pulsdauer des eingestrahlten Pulses entspricht, wenn dieser keine unmittelbare Frequenzverteilung aufweisen würde, diese also erst nach initialer Erzeugung erzeugt werden würde.

Die Erfindung betrifft auch eine Vorrichtung zum Projizieren visueller Objekte in die Umgebung. Die Vorrichtung weist wenigstens eine Strahlungsquelle auf, die dazu eingerichtet ist, elektromagnetische Strahlungspulse in sichtbaren Spektralbereichen (insbesondere Laserlichtpulse) in die Umgebung einzustrahlen. Die Strahlungspulse weisen eine Frequenzverteilung über ihre Pulsdauer auf (also eine zeitliche Frequenzverteilung), die bei dem Einstrahlen in die Umgebung unter Dispersionseinfluss zu einer Pulsdauerverkürzung führt. Diese Vorrichtung muss selbst nicht bewegbar sein, sondern kann z.B. als eine Projektionsvorrichtung an einer bewegbaren Vorrichtung angeordnet werden.

Ferner betrifft die Erfindung ein Fahrzeug umfassend eine solche Vorrichtung, insbesondere ein Kraftfahrzeug und ferner insbesondere einen Personenkraftwagen oder Lastkraftwagen.

Die Vorrichtung kann allgemein dazu eingerichtet sein, ein Verfahren gemäß jeglichem der hierin geschilderten Aspekte auszuführen und/oder bereitzustellen. Hierfür kann sie jegliche weiteren Merkmale und Maßnahmen umfassen, um sämtliche im Kontext des Verfahrens geschilderten Zuständen, Schritte, Wechselwirkungen und Effekte bereitzustellen. Insbesondere können sämtliche Erläuterungen zu und Weiterbildungen von Verfahrensmerkmalen auch auf die gleichlautenden Vorrichtungsmerkmale zutreffen bzw. bei diesen vorgesehen sein.

Ausführungsbeispiele der Erfindung werden im Folgenden anhand der beigefügten schematischen Figuren erläutert. Für gleichwirkende oder gleichartige Merkmale können dabei figurenübergreifend die gleichen Bezugszeichen verwendet werden.
- Fig. 1: zeigt ein Fahrzeug in einer schematisch stark vereinfachten Darstellung, das eine Vorrichtung gemäß einem Ausführungsbeispiel der Erfindung umfasst, wobei die Vorrichtung ein Verfahren gemäß einem erfindungsgemäßen Ausführungsbeispiel ausführt.
- Fig. 2: zeigt eine Detailansicht der Vorrichtung aus Fig. 1 und insbesondere einer Strahlungsquelle hiervon.
- Fig. 3: zeigt ein Ablaufschema des von der Vorrichtung aus den vorstehenden Figuren ausgeführten Verfahrens.

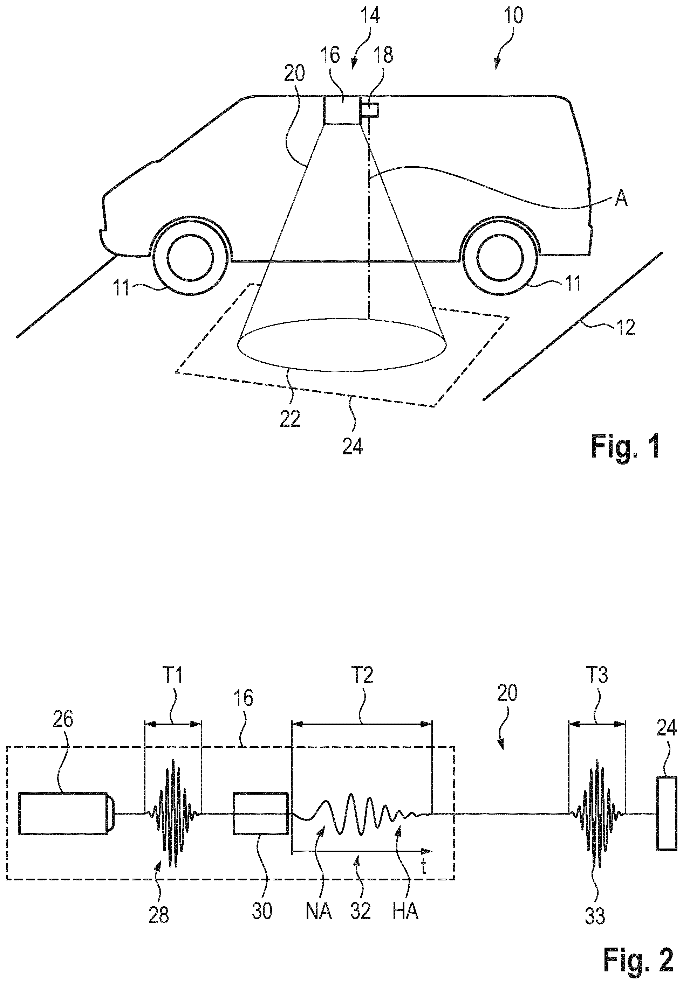

In Fig. 1 ist ein Fahrzeug 10 gezeigt, das ein Kraftfahrzeug und beispielhaft ein Bus zur Personenbeförderung ist. Die gezeigte Ansicht entspricht einer Seitenansicht des Fahrzeugs 10, wobei die abgebildeten Räder 11 zu einer Vorderachse (in Fig. 1 linkes Rad 11) und zu einer Hinterachse (in Fig. 1 rechtes Rad 11) gehören.

Das Fahrzeug 10 befindet sich in der Umgebung 12, die hier im Wesentlichen durch eine Fahrbahn dargestellt ist. Das Fahrzeug 10 weist an seiner dem Betrachter zugewandten Seite eine Projektionsvorrichtung 14 zum Projizieren visueller Objekte in die Umgebung auf. Die Projektionsvorrichtung 14 umfasst eine Strahlungsquelle 16 und optional einen Abstandssensor 18.

Der Abstandssensor 18 kann gemäß jeglichen gängigen Abstandsmessprinzipien ausgebildet sein. Insbesondere handelt es sich um einen optischen Abstandssensor 18, der beispielsweise per Lasertriangulation eine Abstandsmessung vornimmt. Alternativ können radarbasiert Abstandssensoren 18 zum Einsatz kommen. Strichliert angedeutet ist eine Sensorachse A, entlang derer der Abstandssensor 18 einen Abstand zur Umgebung 12 erfassen kann. Vorliegend kann diese Sensorachse A leicht in Richtung des Betrachters geneigt sein. Mit dem Abstandssensor 18 können Abstände der Vorrichtung 14 zu Böschungen, Fahrbahnrand- und insbesondere Gehweghöhen oder zur Fahrbahnoberfläche erfasst werden, welche auch in Abhängigkeit einer Fahrzeugbeladung jeweils variieren können.

Für die Strahlungsquelle 16 ist ein Strahlungskegel 20 angedeutet. Hierbei handelt es sich um ein lediglich virtuelles Merkmal, durch das angedeutet werden soll, in welchen Bereich die Strahlungsquelle 16 Strahlung einstrahlen kann. In dem beispielhaften Fall von Fig. 1 ist als Objekt 22 ein Kreis auf der Fahrbahnoberfläche abgebildet. Dieser kann z.B. einen Warnhinweis (beispielsweise "Stopp"), einen Pfeil zum Andeuten eines geplanten Lenkmanövers oder einen anderweitiger Hinweis an andere Verkehrsteilnehmer enthalten. Strichliert umrissen ist ein Umgebungsbereich 24, zu dem mit dem Abstandssensor 18 ein Abstand gemessen werden kann und in dem das visuelle Objekt 22 auftrifft.

Die Strahlungsquelle 16 kann manuell aktivierbar sein. Sie kann aber auch automatisch von einer nicht gesondert dargestellten Steuereinrichtung des Fahrzeugs 10 aktiviert werden, beispielsweise bei einem Halt an einer Bushaltestelle oder dem Setzen eines Blinkers.

In Fig. 2 ist die Strahlungsquelle 16 in einer schematischen Schnittansicht gezeigt, sodass deren innenliegende Komponenten erkennbar sind. Man erkennt zunächst eine Laserquelle 26. Diese erzeugt (bevorzugt hochfrequente) sichtbare Laserpulse 28, von denen einer beispielhaft gezeigt ist. Hierbei handelt es sich um einen initial erzeugten Fourier-limitierten Laserpuls 28 mit einer besonders kurzen Pulsdauer T1.

Die Strahlungsquelle 16 umfasst auch eine optische Einheit 30, durch die der Laserpuls 28 geführt wird. Bei der optischen Einheit 30 handelt es sich um einen Chirpspiegel, der ein anormales Dispersionsverhalten aufweist. Derartige Bauteile sind aus dem Stand der Technik bekannt. Mittels eines solchen Chirpspiegels 30 kann eine Streckung der Pulsdauer T1 des Pulses 28 erfolgen, sodass ein eingestrahlter Puls 32 mit gestreckter Pulsdauer T2 und zeitlicher Frequenzverteilung erzeugt wird.

Genauer gesagt erkennt man, dass der anfänglich erzeugte Laserpuls 28 eine vergleichsweise kurze Pulsdauer T1 aufweist. Der von dem Chirpspiegel 30 gestreckte und anschließend in die Umgebung eingestrahlte Laserpuls 32 weist hingegen eine vergrößerte Pulsdauer T2 auf. Vorstehend wurde bereits aufgezeigt, das ein gechirpter Puls auch unmittelbar erzeugt und eingestrahlt werden kann.

Angedeutet durch die weiter voneinander beabstandeten Wellentäler des eigestrahlten Pulses 32 ist auch die zeitliche Frequenzverteilung. Entlang einer schematisch angedeuteten Zeitachse t (bzw. entlang der Pulsdauer T2 betrachtet) liegen dabei hochfrequente Anteile HA (insbesondere innerhalb des blauen Lichtwellenspektrums) zeitlich vor niederfrequenten Anteilen NA des Lichtwellenspektrums. Letztere können insbesondere innerhalb des roten Spektrums liegen.

Ein auf diese Weise zeitlich gestreckter Puls 32 propagiert (beispielsweise innerhalb des Strahlkegels 20) durch die Umgebung und die dort vorliegende Luft. Aufgrund der vorstehend geschilderten Zusammenhänge wird der Puls 32 dabei zeitlich gestaucht. Beim Auftreffen auf den Umgebungsbereich 24 weist der entsprechend komprimierte Puls 33 eine gegenüber der anfänglich eingestrahlten (gestreckten) Pulsdauer T2 reduzierte Pulsdauer T3 auf. Diese kann im Wesentlichen der initial erzeugten Pulsdauer T1 entsprechen. Der in der Umgebung 24 auftreffende Puls 33 kann somit wiederum einem Fourier-limitierten Puls 28 entsprechen.

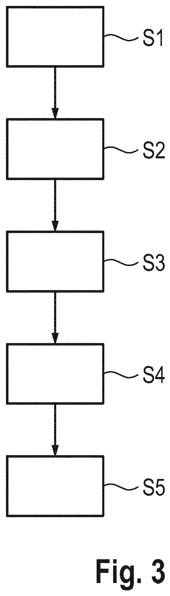

In Fig. 3 ist der geschilderte Ablauf noch einmal mittels eines Verfahrensschemas gezeigt. In einem Schritt S1 wird ein Puls 28 mit einer reduzierten und insbesondere Fourier-limitierten Pulsdauer T1 initial erzeugt. In einem Schritt S2 wird dieser initial erzeugte Puls 28 durch einen gechirpten Spiegel 30 geführt. Dadurch ist der Puls 32 im Schritt S3 zeitlich gestreckt (d.h. weist die vergrößerte Pulsdauer T2 auf) und besitzt die geschilderte Frequenzverteilung. Im Schritt S4 propagiert der eingestrahlte und gestreckte Puls 32 durch die Umgebung und erfährt dabei eine dispersive Selbstkompression. Im Schritt S5 trifft er in der Umgebung 24 auf, wobei er aufgrund der Selbstkompression sich wieder der initial erzeugten Pulsdauer T1 annähert und diese bevorzugt auch aufweist.

Es versteht sich, dass die hierin separat geschilderten Pulse 28, 32, 33 auch als ein einzelner bzw. ein einziger Puls betrachtet werden können, dessen Zustand (insbesondere Pulsdauer und Frequenzverteilung) variiert.

Wie im allgemeinen Beschreibungsteil geschildert, kann vorgesehen sein, dass auf Basis des mit dem Sensor 18 gemessenen Abstandes die anfänglich eingestrahlte Pulsdauer T2 variabel gestaltet wird und insbesondere in Abhängigkeit dieses Abstandes gewählt ist. Dies kann mit dem Ziel erfolgen, dass die Selbstkompression während der Propagation ausreicht, um einen ausreichend komprimierten in der Umgebung auftreffenden Puls 33 zu erhalten und insbesondere, damit dessen Pulsdauer T3 sich der initial erzeugten Pulsdauer T1 annähert.

Hierfür können zusätzlich oder alternativ zu dem gechirpten Spiegel 30 jegliche der vorstehend genannten optischen Einheiten vorgesehen sein, insbesondere vorstehend erwähnte Pulsformer.

Abschließend wird der dem vorgestellten Ansatz zugrundeliegende physikalische Zusammenhalt noch einmal anhand von Formeln erläutert.

Die Spitzenintensität I einer Lichtquelle mit hoher Kohärenz, wie z.B. einer hierin verwendeten Laserquelle 26, kann mittels folgender Gleichung (1) beschrieben werden: $I ∼ \frac{{E}_{p} ⋅ σ}{π ⋅ {ω}^{2} ⋅ τ}$

Dabei ist Eₚ die Pulsenergie gemäß der nachstehenden Gleichung (3), σ ein konstanter Einhüllendenparameter, ω ein Strahldurchmesser und τ die Pulsdauer. Die Spitzenintensität wird in W/m² gemessen.

Durch eine Multiplikation mit der Repititionsrate fᵣₑₚ in der Einheit Hz wird die Spitzenenergiedichte ρ erhalten (2): $ρ ∼ \frac{{E}_{p} ⋅ σ}{π ⋅ {ω}^{2} ⋅ τ ⋅ {f}_{rep}}$

Diese liegt in der Einheit J/m² vor.

Die Pulsenergie ist wie folgt bestimmbar, wobei P die Leistung in Watt bezeichnet (3): ${E}_{p} = \frac{P}{{f}_{rep}}$

Insbesondere aus den Gleichungen (1) und (2) verdeutlicht sich, dass mit zunehmendem Strahldurchmesser ω die Spitzenintensität I bzw. die Spitzenenergiedichte ρ quadratisch abnimmt. Eine Vergrößerung des Strahldurchmessers tritt aufgrund von Divergenzeffekten bei einer Propagation in der Umgebung aber stets auf.

Die sich dadurch automatisch einstellende Abschwächung der Spitzenintensität I führt zu einer verminderten Sichtbarkeit für das menschliche Auge bei zunehmender Entfernung von der Laserquelle 26.

Die Erfindung löst dieses Problem, indem in der vorstehend geschilderten Weise die Pulsdauer τ abstandsabhängig variiert und insbesondere mit zunehmenden Abständen von der Strahlungsquelle 26 reduziert wird.

Da die Pulsdauer τ nahe der Strahlungsquelle aufgrund der zeitlichen Streckung vergleichsweise hoch ist (siehe T2 in Fig. 2), wird, wie sich aus den Gleichungen (1) und (2) verdeutlicht, dort die Spitzenintensität I bzw. Spitzenenergiedichte ρ gezielt herabgesetzt. Hierdurch können aus Gesundheitsgründen einzuhaltende Grenzwerte eingehalten werden. Mit zunehmendem Abstand und sich dabei gezielt reduzierender Pulsdauer τ (siehe T3 in Fig. 2) vergrößert sich hingegen die Spitzenintensität I bzw. Spitzenenergiedichte ρ, sodass die Sichtbarkeit beim Auftreffen in der Umgebung gewährleistet ist.

### Bezugszeichenliste

- 10: Fahrzeug (Vorrichtung)
- 11: (Fahrzeug-)Rad
- 12: Umgebung
- 14: (Projektions-)Vorrichtung
- 16: Strahlungsquelle
- 18: Abstandssensor
- 20: Strahlkegel
- 22: virtuelles visuelles Objekt
- 24: Umgebungsbereich
- 26: Laserquelle
- 28: initial erzeugter Puls
- 30: optische Einheit (gechirpter Spiegel)
- 32: anfänglich eingestrahlter Puls
- 33: in der Umgebung auftreffender Puls
- T1: initial erzeugte Pulsdauer
- T2: anfänglich eingestrahlte Pulsdauer
- T3: in der Umgebung auftreffende Pulsdauer
- NA: niederfrequenter Anteil
- HA: hochfrequenter Anteil
- A: Sensorachse des Abstandssensors
- t: Zeitachse

## Patentansprüche

1. Verfahren zum Projizieren visueller Objekte (22) in die Umgebung (12) einer bewegbaren Vorrichtung (10), insbesondere eines Fahrzeugs, mit:
einer Strahlungsquelle (16), die eine Laserquelle (26) zur Erzeugung von Laserpulsen (28) im sichtbaren Spektralbereich aufweist, wobei die Laserpulse (28) mittels einer optischen Einheit (30) negativ gechirpt und zeitlich gestreckt werden, sodass Strahlungspulse (32) erzeugt werden,
- Einstrahlen der Strahlungspulse (32) im sichtbaren Spektralbereich in die Umgebung (12), wobei die Strahlungspulse (32) eine zeitliche Frequenzverteilung über ihre Pulsdauer (T2) aufweisen, die bei einer Propagation in der Umgebung (12) unter Dispersionseinfluss zu einer Pulsdauerverkürzung führt, wobei die Strahlungspulse (32) in Abhängigkeit von einer Entfernung zu einem Umgebungsbereich (24) erzeugt werden, auf den ein Objekt (22) projiziert werden soll.

2. Verfahren nach Anspruch 1,
**gekennzeichnet durch**:
- Erfassen des Abstands zu dem Umgebungsbereich (24) mit wenigstens einem Abstandssensor (18).

3. Verfahren nach einem der vorangegangenen Ansprüche, **dadurch gekennzeichnet, dass** eine Pulsdauer (T3) bei Auftreffen in der Umgebung (12) näher an der initial erzeugten Pulsdauer (T1) des Laserpulses (28)als an der anfänglich eingestrahlten Pulsdauer (T2) des Strahlungspulses (32) liegt.

4. Vorrichtung (14) zum Projizieren visueller Objekte in die Umgebung (12), mit wenigstens einer Strahlungsquelle (16), die eine Laserquelle (26) zur Erzeugung von Laserpulsen (28) im sichtbaren Spektralbereich und eine optische Einheit (30) aufweist, die derart ausgebildet ist, die Laserpulse (28) negativ zu chirpen und zeitlich zu strecken, um so Strahlungspulse (32) zu erzeugen, die in die Umgebung (12) eingestrahlt werden, wobei bei dem Einstrahlen in die Umgebung (12) unter Dispersionseinfluss es zu einer Pulsdauerverkürzung kommt, wobei die Vorrichtung (14) weiter derart ausgebildet ist, dass die Strahlungspulse (32) in Abhängigkeit von einer Entfernung zu einem Umgebungsbereich (24) erzeugt werden, auf den ein Objekt (22) projiziert werden soll.

5. Fahrzeug (10),
umfassend eine Vorrichtung (14) nach Anspruch 4.

## Claims

1. Method for projecting visual objects (22) into the surroundings (12) of a movable device (10), in particular a vehicle, having:
a radiation source (16) which comprises a laser source (26) for generating laser pulses (28) in the visible spectral range, wherein the laser pulses (28) are negatively chirped and temporally stretched by means of an optical unit (30) so that radiation pulses (32) are generated,
- irradiation of the radiation pulses (32) in the visible spectral range into the surroundings (12), wherein the radiation pulses (32) have a temporal frequency distribution over their pulse duration (T2) which leads to a shortening of the pulse duration during propagation in the surroundings (12) under the influence of dispersion, wherein the radiation pulses (32) are generated on the basis of a distance from a surrounding region (24) onto which an object (22) is to be projected.

2. Method according to claim 1,
**characterized by**:
- determining the distance from the surrounding region (24) using at least one distance sensor (18).

3. Method according to either of the preceding claims,
**characterized in that** a pulse duration (T3), upon impact in the surroundings (12), is closer to the initially generated pulse duration (T1) of the laser pulse (28) than to the initially irradiated pulse duration (T2) of the radiation pulse (32).

4. Device (14) for projecting visual objects into the surroundings (12), having at least one radiation source (16) which comprises a laser source (26) for generating laser pulses (28) in the visible spectral range and an optical unit (30) which is designed to negatively chirp and temporally stretch the laser pulses (28) in order to generate radiation pulses (32) which are irradiated into the surroundings (12), wherein, upon irradiation into the surroundings (12) under the influence of dispersion, a shortening of the pulse duration occurs, wherein the device (14) is further designed such that the radiation pulses (32) are generated on the basis of a distance from a surrounding region (24) onto which an object (22) is to be projected.

5. Vehicle (10),
comprising a device (14) according to claim 4.

## Revendications

1. Procédé permettant la projection d'objets visuels (22) dans l'environnement (12) d'un dispositif (10) mobile, en particulier d'un véhicule, comportant :
une source de rayonnement (16) qui présente une source laser (26) permettant de générer des impulsions laser (28) dans le domaine spectral visible, dans lequel les impulsions laser (28) sont soumises à une fluctuation de longueur d'onde négative et étirées dans le temps au moyen d'une unité optique (30) de sorte que des impulsions de rayonnement (32) sont générées,
- l'émission des impulsions de rayonnement (32) dans le domaine spectral visible dans l'environnement (12), dans lequel les impulsions de rayonnement (32) présentent un allotissement de fréquences temporel sur leur durée d'impulsion (T2) qui, lors d'une propagation dans l'environnement (12) sous l'effet de la dispersion, amène un raccourcissement de durée d'impulsion, dans lequel les impulsions de rayonnement (32) sont générées en fonction d'un éloignement par rapport à une zone d'environnement (24) sur laquelle un objet (22) doit être projeté.

2. Procédé selon la revendication 1,
**caractérisé par :**
- la détection de la distance jusqu'à la zone d'environnement (24) avec au moins un capteur de distance (18).

3. Procédé selon l'une des revendications précédentes,
**caractérisé en ce qu'**une durée d'impulsion (T3) au moment de l'impact dans l'environnement (12) est plus proche de la durée d'impulsion initiale (T1) de l'impulsion laser (28) que de la durée d'impulsion d'émission initiale (T2) de l'impulsion de rayonnement (32).

4. Dispositif (14) permettant la projection d'objets visuels dans l'environnement (12), comportant au moins une source de rayonnement (16) qui présente une source laser (26) permettant de générer des impulsions laser (28) dans le domaine spectral visible, ainsi qu'une unité optique (30) configurée pour exercer une fluctuation de longueur d'onde négative sur les impulsions laser (28) et pour les étirer dans le temps afin de générer des impulsions de rayonnement (32) qui sont émises dans l'environnement (12), dans lequel un raccourcissement de durée d'impulsion est amené par l'émission dans l'environnement (12) sous l'effet de la dispersion, dans lequel le dispositif (14) est en outre configuré de telle sorte que les impulsions de rayonnement (32) sont générées en fonction d'un éloignement par rapport à une zone d'environnement (24) sur laquelle un objet (22) doit être projeté.

5. Véhicule (10),
comprenant un dispositif (14) selon la revendication 4.
